# EUROPEAN PATENT SPECIFICATION

(11) **EP 4 331 348 B1**
(45) Date of publication and mention of the grant of the patent: **19.02.2025**
(21) Application number: 22193649.5
(22) Date of filing: 02.09.2022
(51) Int. Cl.: A01G 9/02

(54) **MODULAR WALL SYSTEM AND A MODULAR WALL**
MODULARES WANDSYSTEM UND MODULARE WAND
SYSTÈME DE MUR MODULAIRE ET MUR MODULAIRE

(43) Date of publication of application: 06.03.2024
(60) Divisional application: 25152256.1
(73) Proprietor: Spiro, Daniel, S., Paradise Valley, AZ 85253 (US)
(72) Inventor: Spiro, Daniel, S., Paradise Valley, AZ 85253 (US)
(74) Representative: AWA Sweden AB

(56) References cited:
- WO-A1-2017/170583
- JP-A- 2006 280 285
- JP-A- 2011 125 260
- KR-A- 20190 040 147
- US-A1- 2011 225 883
- US-A9- 2022 039 327

## Description

### TECHNICAL FIELD

The invention refers to a modular wall system comprising a plurality of elongated wall panels disposed on one another, a plant bedding material tile, a seed/plant cup, a board and an irrigation pipe. Also, a modular wall is provided.

### TECHNICAL BACKGROUND

Aside from establishing physical separation, in urban settings a modular wall with living plant material can reduce pollutants from the air, reduce the ambient temperature, provide a mounting structure for IOT devices, beautify the urban landscape, and reduce ambient noise. Inside the urban environment, along with nature sounds, noise is generated by humans and machines. Noise is defined as unwanted sound energy traveling by sound waves that for humans is primarily perceived as audible sound. Most urban jurisdictions have rules to regulate noise levels below agreed thresholds that can be measured. Also, in work environments, safety rules limit the amount of noise workers can be subjected to. The human ear is configured to perceive sound in the ranges between 20 Hz and 20kHz. A normal speaking voice is around 65 dBA. A rock concert can be approximately 120 dBA.

In North America, many jurisdictions set the noise threshold limit to +/- 85 dBA to avoid permanent hearing loss, and in work environments safety rules require lesser time exposure for every 3 dBA above the threshold.

In cities, people are regularly exposed to noise. Noise has become an expected by-product of urban life since the Industrial Revolution. Unfortunately, this by-product is known to disrupt people's sleep patterns and induce stress, resulting in negative health outcomes.

While guardrails to curtail excessive noise have been placed in most jurisdictions, there is no system in place that would encourage noise polluters to reduce or eliminate the noise they generate.

The present innovation aims to subdue this myriad of noises by natural and sustainable means. Further, the present innovation expands on the art described in US Patent Application 16/805,093, articulating an acoustic solution to subdue noise in proximity to the modular vertical wall, that can also grow plant material.

US2011/225883 discloses a vegetation wall for supporting vegetation.

JP 2011125260A discloses an exterior or interior wall for planting vegetation.

JP2006280285A discloses a green wall using capillary action.

US2022039327A discloses an automated outdoor modular vertical plant cultivation system forming a vertical structure.

### SUMMARY OF THE INVENTION

An object of the present invention is to provide a modular wall system that at least partly overcome the drawbacks and issues mentioned above.

These and other objects are solved by a modular wall system according to claim 1 comprising a plurality of elongated wall panels disposed on one another, a plant bedding material tile, a seed/plant cup, a board, and an irrigation pipe, wherein:
the elongated wall panels comprise a vertical wall, a top flange and a bottom flange;
the fluid emitting irrigation pipe is disposed on and/or couples to at least one of the top and bottom flanges of an elongated wall panel;
the board comprises at least one opening configured to receive a seed/plant cup, and wherein the board is coupled to at least one of the flanges of the elongated wall panel, thereby forming a wall panel interior;
the plant bedding material tile is configured to be coupled to an interior vertical wall portion of the elongated wall panel and/or to an interior wall portion of the board;
the seed/plant cup is configured to be inserted from the outside through the at least one opening in the board to thereby be partially disposed inside a cup bedding material opening of the plant bedding material tile; and wherein
once irrigated by a fluid supply provided by the fluid emitting irrigation pipe, a seed/plant in the seed/plant cup disposed inside the plant bedding material tile is configured to grow roots into the plant bedding material and grow a canopy extending from an exterior of the board.

Accordingly, a modular wall system is provided that is based on vertically disposed elongated wall panels that are configured to be arranged in a shelf-like manner one on top of the other. The elongated panels are configured to support one or more plant bedding material tiles. Also, a board is configured to couple to at least one of the flanges of a respective elongated panel to thereby form a wall panel interior. The board comprises openings allowing the insertion of seed/plant cups into corresponding openings in the plant bedding material tile. By the integrated irrigation system, the seeds/plants are allowed to grow and form canopies that extend from the interior of the wall system out and along/across the exterior surface of the boards. Accordingly, the invention provides a living wall that contributes to the reduction of pollutants from the air, reduces the ambient temperature, contributes to the beauty of the urban landscape and, not at least reduces ambient noise. By the modularity, the length, and the height of the wall may be easily adapted to actual circumstances. Also, by the provision of boards and plant bedding material tiles, each of them having mating openings, the type of plants may be easily exchanged over the seasons if necessary and also the choice of plant bedding material may be adapted to the choice of plants.

The vertical modular wall system allows the formation of a wall by arranging the vertical wall panels one on top of the other in a shelf-like manner. The vertical panels can be single or double sided to retain plant bedding material and/or boards on one side of the wall and/or on both sides. Thus, the two opposing sides of the resulting wall may be provided with different appearance and different properties.

The boards may be solid boards or be acoustic boards. Each elongated wall panel may comprise a combination of solid boards and acoustic boards, the boards being distributed along the longitudinal extension of the wall panel. Also, not all boards must be provided with holes configured to receive seed/plant cups.

In yet in another alternate configuration, sound attenuating material can be coupled to the interior vertical wall of the elongated wall panel and/or to the interior face of the solid or acoustic board that encloses the wall panel interior from the exterior. In all scenarios, the plant bedding material and/or the sound attenuating material is disposed between the vertical wall panel and the solid/acoustic board, wherein the top and bottom flanges of the elongated wall panel couple to the solid/acoustic board to form an enclosure.

In at least one embodiment, the fluid can drip from above onto the plant bedding material tile below. This is allowed in the event the irrigation pipe is arranged along either a top or bottom surface of the top flange of the respective elongated wall panel. One or both of the top and bottom flanges may be provided with weep holes. In another embodiment, the fluid can irrigate the plant bedding material tile from below. In such event, the irrigation pipe may be arranged along e.g. the bottom flange of the respective elongated wall panel.

Openings in the plant bedding material tile and the solid/acoustic boards enable seeds/plant cups to be inserted from the exterior surface of the solid/acoustic board into said pre-fabricated opening/s. Once irrigated, the plant/s' roots grow into the bedding material, thereby anchoring the plant/s.

The board may in one embodiment be an acoustic board. The board may in alternative embodiment be a non-acoustic board.

The board, no matter if it is solid or acoustic, may have at least one sound attenuation through opening. At least one of: the size, the quantity, the form, the thickness, and/or the location of the openings in the sound attenuation may be configured to attenuate sound level intensity and/or frequency by local ambient conditions. At least one of the plant bedding material tile and the seed/plant cup may exhibit sound attenuation properties.

The board may comprise a bore configured to couple the board to the elongated wall panel by means of a mechanical fastener. The mechanical fastener may by way of example be a screw or a clip.

The board may be removably fixated between the top and bottom flanges of the elongated wall panel. The board may be openable by a tilting movement while being supported by one of the top and bottom flanges.

The modular wall system may comprise at least two single-sided or double-sided elongated wall panels.

A flange of a first elongated wall panel may be configured to be coupled to a flange of a second elongated wall panel by at least one reciprocating mechanical key. The reciprocating mechanical key may be formed as an undulating pattern having an extension in parallel with the elongated extension of the wall panel. The undulating pattern of the mechanical key of the top flange of a first elongated wall panel may be complementary to the undulating pattern of the mechanical key of the bottom flange of a second elongated wall panel.

The top and bottom flanges of the elongated wall panels may comprise weep holes. The number of weep holes and also their positions may correspond to the number and positions of cup bedding material openings of the plant bedding material tiles. Thereby, each seed/plant may be properly irrigated.

The plant bedding material tile may comprise at least one funnel. The at least one funnel may be substantially vertically aligned with a respective cup bedding material opening in the plant bedding material tile. The number of funnels and their positions may correspond to the cup bedding material openings of the plant bedding material tile. Thereby, each seed/plant may be properly irrigated.

The plant bedding material tile may be configured to be coupled to the board and/or to a plant bedding material casing. The casing may be seen as a protection that facilitates handling of the tile and also that prevents the tile from disintegrating and crumbling over time.

According to another aspect, the invention relates to a modular wall formed by the use of a modular wall system with the features according to any of claims 1-10, wherein a plurality of elongated wall panels are arranged in stacked relationship, one on top of the other, between at least two vertically extending posts.

The modular wall may be formed by at least two single-sided or double-sided elongated wall panels and at least one of the sides of the modular wall may comprise a plurality of seed/plant cups.

According to yet another aspect not forming part of the invention, a modular wall system is provided. The modular wall system comprises a plurality of elongated wall panels disposed on one another, a plant bedding material tile, a seed/plant cup, and an acoustic board; wherein
the elongated wall panels comprise a vertical wall, a top flange and a bottom flange;
the acoustic board comprises at least one opening configured to receive a seed/plant cup, and wherein the acoustic board is configured to couple to at least one of the top flange and bottom flange of the elongated wall panel, thereby forming an elongated wall panel enclosure;
the plant bedding material tile is configured to be coupled to an interior vertical wall portion of the elongated wall panel and/or to an interior wall portion of the acoustic board, and wherein the plant bedding material tile comprises at least one cup bedding material opening;
the seed/plant cup is configured to be inserted from the outside through the at least one opening in the acoustic board and to be partially disposed inside one of the at least one cup bedding material openings of the plant bedding material tile; whereby
a supply of plant irrigation fluid is configured to flow along the elongated wall panel inside the elongated wall panel enclosure; and whereby
exterior ambient sound, at least in part, is configured to be absorbed and attenuated by the acoustic board, the seed/plant cup, the plant bedding material tile, and a plant growing from the seed/plant cup.

The modular wall system of this alternative aspect has a similar overall design as the system described above. Hence, the features and advantages discussed above are equally applicable to this embodiment.

At least one of: the size, the quantity, the form, the thickness, and/or the location of openings in the acoustic board may be configured to attenuate sound level intensity and/or frequency by local ambient conditions.

The acoustic board may comprise a bore configured to couple the acoustic board to the elongated wall panel by means of a mechanical fastener.

The acoustic board may be configured to be removable fixated between the top and bottom flanges of the elongated wall panel. The acoustic board may be openable by a tilting movement while being supported by one of the top and bottom flanges.

The modular wall system may comprise at least two single-sided or double-sided elongated wall panels.

A flange of a first elongated wall panel may be configured to be coupled to a flange of a second elongated wall panel by at least one reciprocating mechanical key.

The plant bedding material tile may be configured to be coupled to the acoustic board and/or to a plant bedding material casing.

According to yet another aspect not forming part of the invention, a modular wall system comprising a plurality of elongated wall panels disposed on one another is provided. The modular wall system comprises a sound attenuation material tile and an acoustic board; and wherein:
the elongated wall panels comprise a vertical wall, a top flange and a bottom flange;
the top flange of a first lower elongated wall panel is coupled to the bottom flange of a second upper elongated wall panel by at least one reciprocating mechanical key;
the acoustic board with at least one sound attenuation opening is configured to couple to at least one flange of a respective elongated wall panel to thereby enclose an interior space in said elongated wall panel;
the sound attenuation material tile is configured to be disposed inside the interior space formed by the elongated wall panel and the acoustic board; whereby
exterior ambient sound, at least in part, is absorbed and attenuated by the acoustic board and the sound attenuation material tile being disposed inside the elongated wall panel of the modular wall.

The modular wall system of this additional alternative aspect has a similar overall design as the system described above. Hence, the features and advantages discussed above are equally applicable to this embodiment.

The acoustic board may comprise at least one opening for a seed/plant cup.

The sound attenuation material tile can couple to at least one seed/plant cup.

The acoustic board can couple to a sound attenuation material tile.

The sound attenuation material tile may be a plant bedding material tile and the acoustic board can couple to a plant bedding material casing encircling the sound attenuation material tile. At least one of: the size, the quantity, the form, the thickness, and/or the location of the openings in the sound attenuation tile may be configured to attenuate sound level intensity and/or frequency by local ambient conditions.

The acoustic board may be configured to be detachable and secured to the elongated wall panel by a mechanical fastener.

The acoustic board may be configured to be removably fixed between the top and bottom flanges of the elongated wall panel.

### BRIEF DESCRIPTION OF THE DRAWINGS

A more complete understanding of the present invention may be derived by referring to the detailed description and claims when considered in connection with the Figures, wherein like reference numbers refer to similar items throughout the Figures, and:
**Figures 1a** and **1b** show single- and double-sided wall panel sections, respectively.
**Figures 2a** and **2b** show front and back perspective views of a plant bedding material panel, respectively.
**Figures 3a** and **3b** show front and back perspective views of a plant bedding material casing, respectively.
**Figures 4a** and **4b** show front and back perspective views of an acoustic board, respectively.
**Figure 5a** shows a perspective view of a seed/plant cup and **Figure 5b** shows a partial enlarged section of a seed/plant cup inserted into a modular wall panel.
**Figures 6a** and **6b** show in perspective view mechanical means to couple the plant bedding material casing to an acoustic board, and the elongated wall panel, respectively.
**Figures 7a** and **7b** show exemplary methods of removable and fixed coupling of the acoustic board to the flanges of the wall panel, respectively.
**Figures 8a** and **8b** show exemplary single- and double-sided wall panel sections with the plant bedding material inside the casing coupled to an exterior facing acoustic board, respectively. **Figure 8c** shows a back-to-back single sided wall section configuration with an air gap between the wall panels.
**Figures 9a** and **9b** show front and back exploded perspective views of the wall panel assembly, including the plant bedding material and the acoustic board, respectively.

### DETAILED DESCRIPTION OF EMBODIMENTS OF THE INVENTION

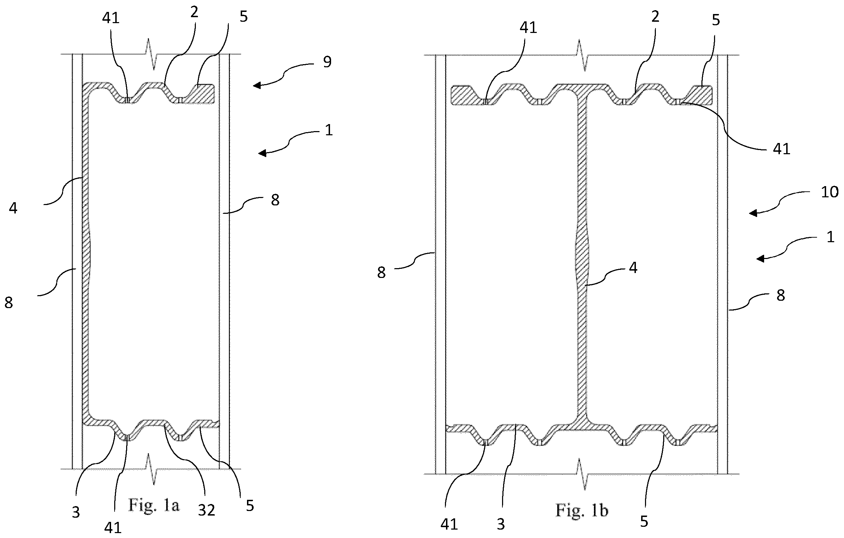

In the following one embodiment of the invention will be discussed with reference to the drawings. **Fig. 1a** and **1b** show single- and double-sided wall panel **9, 10** sections, respectively.

**Fig. 1a** shows a transverse section of a "C" shaped single-sided elongated wall panel **9.** The elongated wall panel **9** comprises a vertical wall **4,** a top flange **2** and a bottom flange **3.** The flanges **2, 3** show mechanical keys 5. The mechanical keys **5** are disclosed as having an undulated pattern. The reciprocating mechanical key, no matter pattern, may have an extension in parallel with the elongated extension of the wall panel. The undulating pattern of the top flange **2** of a first elongated wall panel may be complementary to the undulating pattern of the mechanical key of the bottom flange **3** of a second elongated wall panel. It is to be understood that other types of mechanical keys may be equally applied. The mechanical keys **5** are configured to interlock with elongated wall panels **9,** placed above and/or below a first wall panel **9.** Accordingly, the top flange **2** of a first lower elongated wall panel **9** is configured to lockingly engage the bottom flange **3** of a second upper elongated wall panel **9.** Thus, a plurality of elongated wall panels **9** are configured to be vertically stacked, one on top of the other.

The present figure's single-sided cross-section can be configured to retain plant material and/or a board on one side of the single-sided wall panel **9.**

The top and bottom flanges **2, 3** do both comprise through-going weep holes **41.** The weep holes will be further discussed below.

Now turning to **Fig. 1b****,** a transverse section of a double-sided elongated wall panel **10** is shown. The elongated wall panel **10** has an overall "I" shaped cross-section. The elongated wall panel **10** comprises a vertical wall **4,** a top flange **2** and a bottom flange **3.** The flanges **2, 3** show mechanical keys **5.** The mechanical keys **5** are disclosed as having an undulated pattern. The undulating pattern of the top flange **2** of a first elongated wall panel may be complementary to the undulating pattern of the mechanical key of the bottom flange **3** of a second elongated wall panel. It is to be understood that other types of mechanical keys may be equally applied. The mechanical keys **5** are configured to interlock with elongated wall panels **10,** placed above and/or below a first wall panel **10.** Accordingly, the top flange **2** of a first lower elongated wall panel **10** is configured to lockingly engage the bottom flange **3** of a second upper elongated wall panel **10.** Thus, a plurality of elongated wall panels **10** are configured to be vertically stacked, one on top of the other.

The top and bottom flanges **2, 3** do both comprise through-going weep holes **41.** The weep holes will be further discussed below.

No matter if the elongated wall panel **9, 10** is a single sided or a double-sided wall panel, one or both of the flanges **2, 3** is formed or adapted to retain a means of conveying fluid and/or electricity. This will be further explained below. In addition, one or both of the flanges **2, 3** is configured to retain a solid or acoustic board (omitted in **Figs. 1a** and **1b**) and/or to have a means to fasten a solid/acoustic board to one or both of the flanges **2, 3.** This will be further discussed below.

Further, no matter if the elongated wall panel **9, 10** is a single- or double-sided panel, the elongated wall panel **9, 10** is an elongated structure configured to distribute its weight laterally along its bottom flange **3** surface. An arrangement of wall panels **1,** with two or more elongated wall panels **9, 10** arranged above one another, is configured to be secured to or supported by at least two vertical posts **8** disposed at the opposite ends of the elongated wall panels **9, 10.** The posts **8** are only illustrated highly schematically.

The elongated wall panels **9, 10** can be fabricated by methods of: pultrusion, extrusion, 3D printing, and pressure forming. The elongated wall panels **9, 10** can be made of metallic or non-metallic material that can be noncorrosive and inert to the elements where it is placed.

The present figure's cross-section can be configured to retain plant material and/or plant material and boards on one or both sides of the double-sided wall panel **10.** Thus, one side may be configured to retain plant material whereas the other side may be configured to retain a board. Also, one and the same side may be configured to retain a combination of boards and plant material. As will be discussed below, the board may be of an acoustic or non-acoustic material.

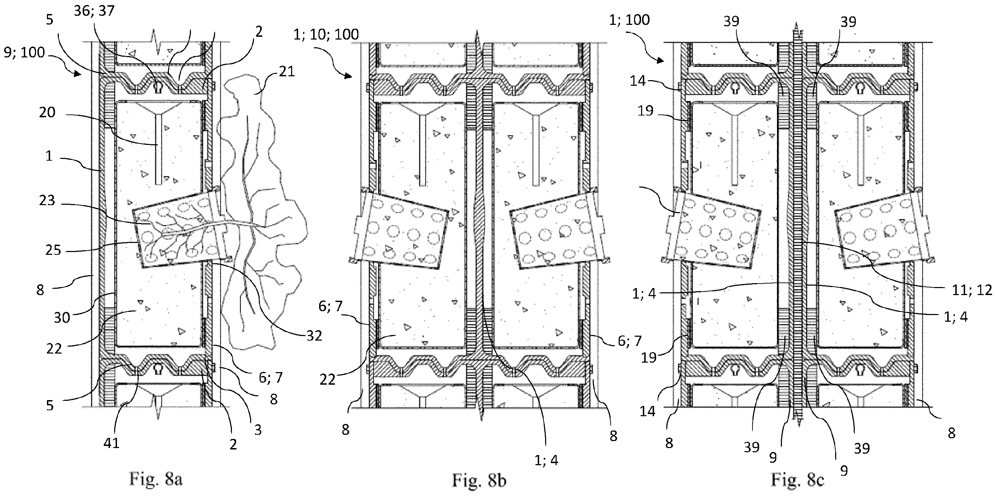

In another arrangement, see **Fig. 8c****,** a modular wall **100** according to the invention can be comprised of two single-sided wall panels **9** disposed back-to-back to one another with an air gap **11** between them, or with a barrier member **12.** The barrier member **12** can have several a single or multiple uses further described in more detail herein.

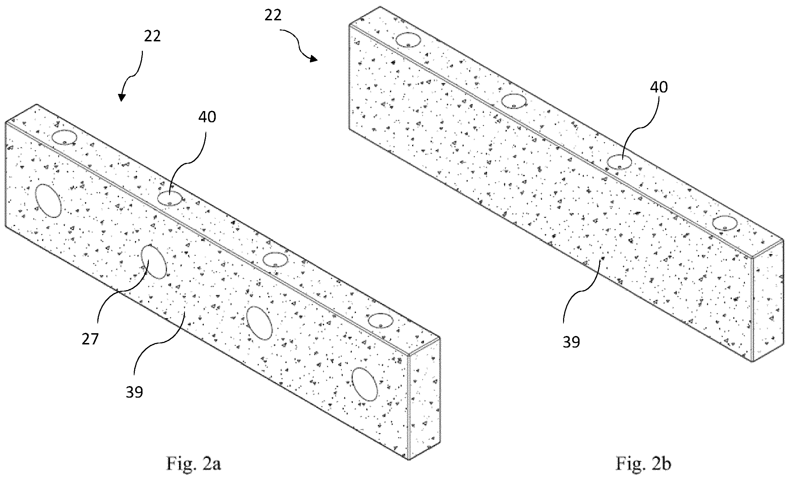

Now turning to **Figs. 2a** and **2b****,** which show front and back perspective views of a plant bedding material tile **22,** respectively.

**Fig. 2a** shows in perspective view a plant bedding material tile **22.** The plant bedding material tile **22** can be fabricated of organic material that can be comprised of coconut fiber, wood chips, pulverized tree bark, and/or similar material. In other embodiments, the plant bedding material tile **22** can also be comprised of manufactured fiber such as mineral wool or rock wool. The plant bedding material tile **22** is configured to provide an anchoring medium for plants' roots. In addition, the plant bedding material tile **22** can retain and provide humidity, minerals and additives for the plants.

The plant bedding material tile **22** can be formed in a mold under pressure. The plant bedding material tile **22** can have varying thicknesses and profiles. To harden the tile, the plant bedding material aggregate can be mixed with a binder. The binder material can be produced by nature, having no harmful environmental impact. In addition, at least one plant bedding material tile **22** can be pre-seeded.

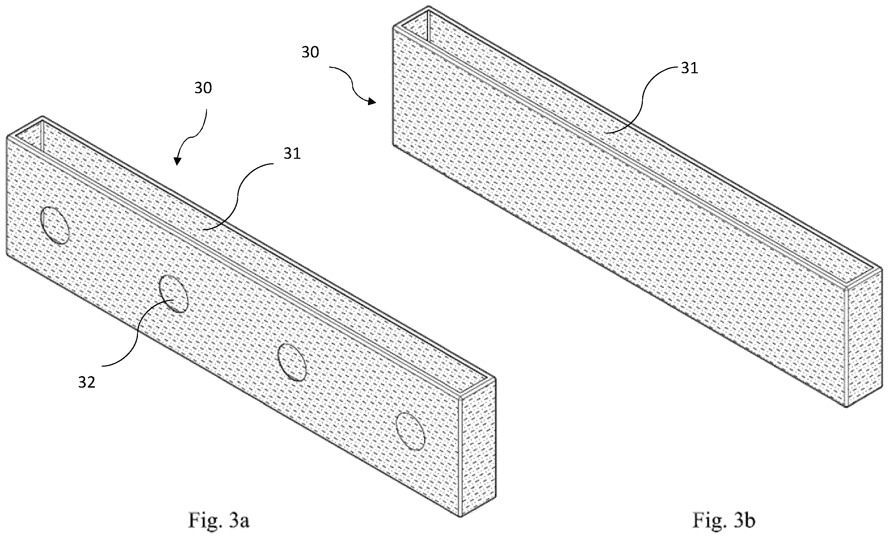

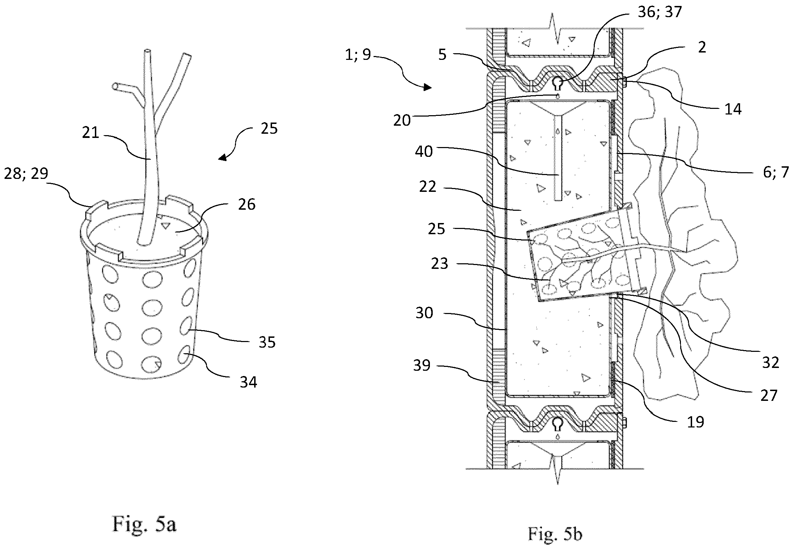

The plant bedding material tile **22** is formed with at least one cup bedding material opening **27** configured for a seed/plant cup (see **Fig. 5b**). The at least one cup bedding material opening **27** is arranged in one of two opposing vertical side walls of the plant bedding material tile **22.** The opening **27** does preferably have a non-horizontal extension. The cup, as will be discussed below, is configured to be inserted through a casing and/or a board which as such may be solid/acoustic. For reasons of durability, the plant bedding material tile **22** can be placed in a fabric casing **30,** as shown in **Figs. 3a** and **3b****.**

As is shown in **Fig. 2a****,** the present figure shows a funnel **40** on the top wall of the plant bedding material tile **22.** The funnel **40** can be at least partially formed as a recess in the bedding material tile **22** and/or be a separate member to be inserted upon installation of the plant bedding material tile **22.**

The plant bedding material tile **22** is configured to be positioned below an irrigation pipe as will be further discussed below with reference to **Fig. 5b****.** Irrigation fluid can then flow by gravity and/or under pressure to the plant bedding material tile **22** disposed below. The irrigation fluid is preferably configured to be supplied from the irrigation pipe to the one or more funnels **40** in the plant bedding material tile **22** in a manner to be described below.

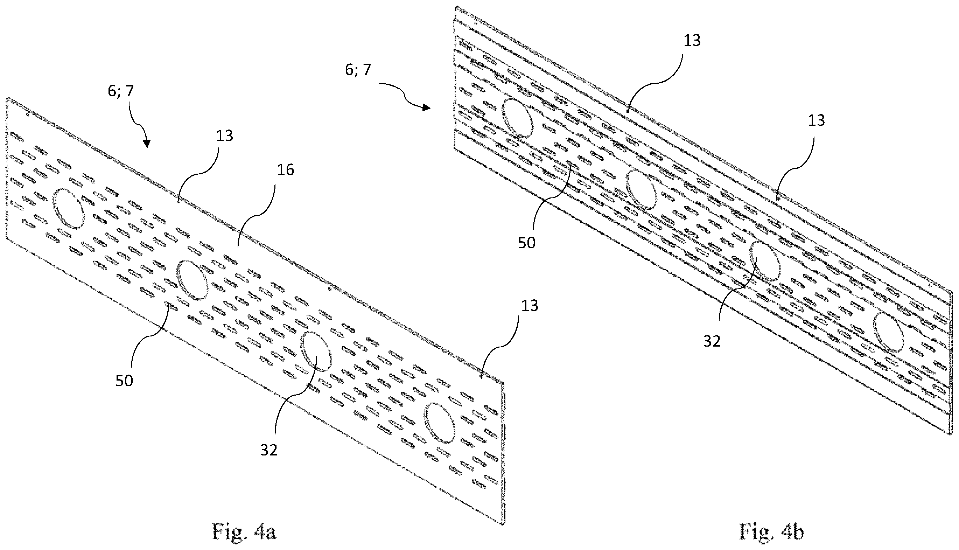

**Fig. 2b** shows a back side perspective view of the plant bedding material tile **22.** The back side of the plant bedding material tile **22** is configured to face an inner portion of the vertical wall panel **4** of an elongated wall panel **9, 10.** The back side of the plant bedding material tile **22** surface is solid, i.e. without any cup-receiving openings. The plant bedding material tile **22** can be configured to couple to the vertical wall panel **4** of the elongated wall panel **9, 10** and/or to a solid/acoustic board **6, 7** that couples to at least one flange **2, 3** of the wall panel **9, 10.** The board **6, 7** will be further discussed below with reference to **Figs. 4a** and **4b****.**

The plant bedding material tile **22** has sound attenuation properties that can vary by at least one of: the material thickness, density, material, and moisture absorbance capability. In at least one embodiment where plant material is not used, sound attenuation material **39** can be used in lieu of plant bedding material tile **22** of similar or better sound attenuation properties. Thus, the principle as is disclosed in **Figs. 2a, 2b** is equally applicable in the event the tile instead of being made of a plant bedding material is made of sound attenuating material to thereby constitute a sound attenuating tile. The skilled person realizes that is such case, any cup bedding material openings **27** and funnels **40** may be omitted.

Now turning to **Figs. 3a** and **3b** which show front and back perspective views of a plant bedding material casing **30,** respectively.

**Fig. 3a** shows a perspective view of the plant bedding material casing **30.** The casing **30** form substantially emulates the plant bedding material tile **22** form. The plant bedding material tile **22** is configured to be disposed inside the casing **30.**

The casing's **30** prime purpose is to keep the tile 22 form intact and to prevent the tile's **22** organic material from crumbling once the tile **22** comes in contact with fluid **20.** The tile **22** material expands upon coming into contact with fluid **20.** The casing **30** limits the rate of expansion while maintaining the tile's **22** form

As a secondary attribute, the casing **30** provides is a good contact surface for coupling the plant bedding material tile **22** to the vertical wall **4** of the elongated wall panel **9, 10** and/or to an interior surface of the solid or acoustic board **6, 7** (not shown) coupled to at least one of the top and bottom flanges **2, 3.** Further, the plant bedding material tile **22** can be encased inside a casing **30** and the casing **30** can then couple to the vertical portion of the vertical wall **4** and/or the solid/acoustic board **6, 7.**

The present figure shows a top surface opening **31** for the insertion of a plant bedding material tile **22.** In a different embodiment, this surface **31** can be fully or partially enclosed following the insertion of the plant bedding material tile **22.** On the exterior facing side of the casing **30,** four plant cup openings **32** are shown configured to receive seed/plant cups **25** through the casing **30** into the plant's bedding material tile **22.**

The casing **30** can be made of non-organic or organic material fabric such as hemp or canvas, with a weave pattern that reduces irrigation fluid **20** egress. In addition, at least a portion of the casing **30** can be treated to become partially or fully non-permeable.

**Fig. 3b** shows the back side of the plant bedding material tile casing **30.** The back side of the plant bedding material tile casing **30** is configured to face the inner vertical wall of the wall panel **4** of the elongated wall panel **9, 10.** The back side of the casing 30 can in at least one embodiment be figured to couple to the vertical wall **4** of an elongated wall panel **9, 10.**

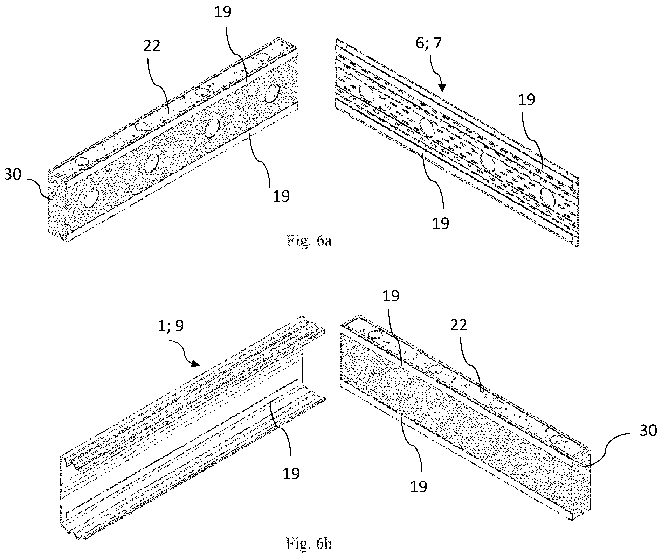

The skilled person realizes that the bedding material casing **30** may be omitted, depending on the physical properties/inherent strength of the plant bedding material tile 22. Thus, the bedding material tile **22** can be configured to couple directly to the vertical wall **4** of the elongated wall panel **9, 10** and/or to the inner face of a board **6, 7** similarly to mounting the casing **30** as shown in **Figs. 6a** and **6b****.**

In the event the tile instead should be operable as a sound attenuation tile, such tile may be configured to be disposed inside the casing **30.** It is realized that the plant cup openings **32** in such case can be omitted.

Now turning to **Figs. 4a** and **4b** which show front and back perspective views of an acoustic board **7,** respectively. The description is equally, unless not explicitly stipulated, applicable to a solid board **6.**

**Fig. 4a** shows a perspective view of an acoustic board **7.** The acoustic board **7** is configured to couple to at least one of the top and bottom flanges **2, 3** of a elongated wall panel **9, 10** in a manner that will be discussed below. The acoustic board **7** is configured to be disposed on the exterior face of the modular wall **100.** The acoustic board **7** is configured to help attenuation of ambient noise, to provide a mounting structure for a seed/plant cup **25,** to protect the irrigation system and the plant bedding material **26** in the plant bedding material tile **22** from vandals, to protect any electrical devices retained inside an arrangement of wall panels **1** from thieves, and to help aeration of the plant bedding material **26.**

The board's exterior surface can also be configured to receive graphic print. Such print can show pattern and colour in the form of imagery and text. The present figure shows three types of openings in the exterior face of the acoustic board: openings **32** for a seed/plant cup; openings **50** that dampens sound; and bore openings **13** for coupling the acoustic board **7** to a support structure.

The acoustic board **7** is configured to receive at least one seed/plant cup **25** (see e.g. **Fig. 5b**) through a respective opening **32.** The opening **32** is sized to be compatible with a seed/plant cup **25.**

Further, in at least one embodiment, a mechanical keying element can key and/or lock a seed/plant cup **25** to the acoustic board **7** (not shown).

The acoustic board **7** comprises a pattern with a plurality of sound attenuation openings **50.** Instead of openings **50,** recesses may be arranged to fulfil the same purpose. The openings **50** are configured to break down the sound wave pressure, and to let a portion of the sound to be absorbed by a plant bedding material tile **22** that is configured to be arranged behind the board 7. The sound absorption properties of the plant bedding material **26** in the tile **22** is significant and, coupled with plant material **21** growing on the acoustic board **7,** the acoustic board **7** together with the plant bedding material tile **22** can substantially reduce urban noise. The quantity, size, form, thickness and location of the sound attenuating openings **50** can be preconfigured to mitigate a specific environment's noise level intensity and frequency.

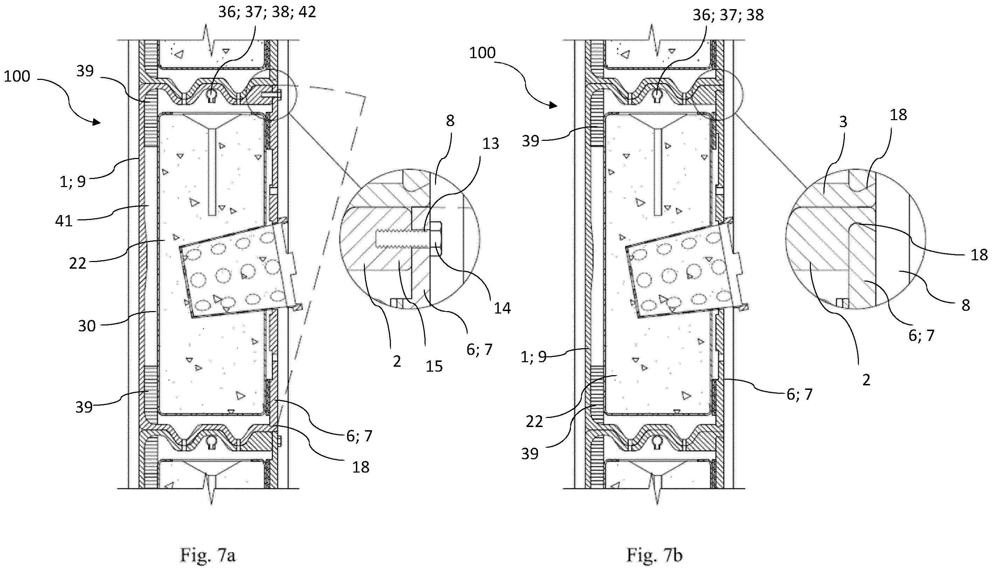

The at least one bore **13** can be used to secure the acoustic board **7** to a retaining structure. In Fig. **7a****,** the present innovation shows such a means of securing the board **7** to a top flange **2** of a wall panel **1.** In this figure, at least one mechanical fastener **14** in the form of a screw couples the acoustic board **7** to a protrusion **15** built into the top flange **2** of the elongated wall panel **9.** The same principle is equally applicable in the event of a double-sided elongated wall panel **10.** In another embodiment, see **Fig. 7b****,** the acoustic board **7** can be secured to a top and a bottom flange **2, 3** of the elongated wall panel **9** with no need for any mechanical fastener **14.** In this embodiment, the upper and lower edges of the acoustic board **7** are held in place by corresponding elongated counter channels **18** in the top and bottom flanges **2, 3.**

In yet another embodiment, in lieu of an acoustic board **7,** a solid board **6** can be used, with the same or similar means as the acoustic board **7** to couple it to a retaining structure. As with the acoustic board **7,** the solid board **6** can have at least one opening **32** to receive a seed/plant cup **25.** In addition, the exterior surface of the solid board **6** can be painted and can display graphic images and/or text. The solid board **6** can have no explicit acoustic properties.

The surfaces of both the solid and the acoustic boards **6, 7** are washable and can have a protective membrane **16** layer that makes the removal of graffiti easier. Both the solid and acoustic boards' **6, 7** thicknesses are configured to minimize the boards' **6, 7** weight without compromising their respective performances.

The size of the solid and acoustic boards **6, 7** is governed by the clear height between the top and bottom flanges **2, 3** of the elongated wall panel **9, 10.** The skilled person realizes that the boards may include optional (not illustrated) unitarily formed or non-unitarily formed stiffeners to protect the boards from cross impact. The length of the solid or acoustic board **6, 7** can be configured to meet industry standards and ease of shipping and installation.

**Fig. 4b** shows the back side of the acoustic board **7.** This side is configured to face the interior vertical wall **4** of an elongated wall panel **9, 10.** The openings shown **32, 50, 13** include the same openings described in **Fig. 4a****,** inferring that the present embodiment openings are through openings.

Also, as shown in **Fig.** 4a and even better in **Fig. 7a****,** at least the bottom longitudinal end of the acoustic board **7** is rounded. Rounding the bottom longitudinal end of the acoustic board **7** enables installation and removal of the board **7** by pulling the board **7** from a bottom flange **3** of an elongated wall panel 9, 10 by a rotational, i.e. tilting motion. The bottom flange **3** of the wall panel may exhibit a reciprocating counter channel **18** built to support the weight of the acoustic board **7** and rotational motion. This is best seen in **Fig. 7a****.**

Yet in another embodiment, a solid 6 or an acoustic board **7** can be detached from an elongated wall panel **9, 10** by releasing a mechanical fastener **14,** slightly lifting the board **6, 7** and pulling the panel **6,7** outwardly. Further sound attenuation material **39** can complement plant bedding material tile **22** if the plant bedding material tile **22** coverage inside the wall panel **1** should be insufficient. This is best seen in **Figs. 7a** and **7b****.**

**Fig. 7b** discloses an embodiment where the board **6, 7** is mounted to the elongated wall panel **9, 10** by the longitudinal edges of the board **6, 7** being wedged in a respective reciprocating counter channel **18** in the top and bottom flanges **2, 3.** This configuration provides a high security against tampering with the internal elements of modular wall **100.** The board **6, 7** can be detached from the elongated wall panel **9, 10** by pulling the panel **6,7** outwardly.

Both the solid and acoustic boards **6, 7** can be fabricated of metallic or non-metallic material and can be shipped from factory with or without mounting device/s. In addition, at least one of the boards **6, 7** can ship from factory already coupled to a plant bedding material casing **30** with or without any tile disposed inside the casing **30.**

The two shown exemplary methods of coupling boards **6, 7** to at least one flange **2, 3** of the wall panel **1** merely represent preferred methods. There can be several other methods that accomplish the stated purposes above.

**Fig. 5a** shows a perspective view of a seed/plant cup **25** and **Fig. 5b** shows a partial enlarged section of a seed/plant cup **25** inserted into a modular elongated, single-sided wall panel **9.** The principle is equally applicable to a double-sided wall panel **10.**

**Fig. 5a** shows a perspective view of a seed/plant cup **25** with a plant **21** planted in the cup's **25** plant bedding material **26.** The figure shown has a top mounting ring **28** configured to extend out from the surface of a solid or the acoustic board **6, 7** while the concealed portion of the cup **25** is configured to decline through the casing **30** opening **32** into the opening **27** in the plant bedding material tile **22.** The cup's **25** dimensions can be configured to match standard industry cup dimensions as sold in major national home and garden stores. In fact, this innovation foresees home and garden stores' nurseries providing the seed/plant cups **25** to consumers.

The seed/plant cup **25** can be made of organic or non-organic material with perforated openings **34** to enable the plant's roots **23** to grow into the plant bedding material tile **22** inside the wall panel **1.** In at least one embodiment, the edges **35** of the perforated openings **34** in the seed and plant cups **25** can be sharp. In addition, protrusion tab/s **29** built into the seed/plant cup **25** top ring **28** can enable rotating the seed/plant cup **25** about the cup's **25** central axis.

When the plant **21** has outlived its useful life, one can rotate the cup **25** and the sharp perforated opening edges **35** of the cup **25** can cut the roots **23,** thereby enabling the extraction of the cup **25** from the plant bedding material tile **22.** Additional information about the seed/plant cup can be found in the Applicant's application number US 16/805,093 which is included by reference.

**Fig. 5b** shows a transverse section of a partial single-sided wall panel arrangement **1.** The elongated C-shaped wall panel **9** with an exemplary arrangement comprises a plant bedding material tile **22** retained inside a casing **30** which in turn is coupled to a solid or acoustic board **6; 7.** A seed/plant cup **25** is shown inserted through an opening **32** in the exterior face of the board **6, 7** into a corresponding cup bedding material opening **27** in the plant bedding material tile **22.** The present figure shows an irrigation pipe **36** coupled to a bottom face of a top flange **2** of the elongated wall panel **9.** The irrigation pipe **36** with an irrigation nozzle **37** is disposed in a mechanical key **5** formed in the flange **2.** Irrigation fluid **20** conveyed through the irrigation pipe **36** is emitted onto a funnel **40** that carries the fluid **20** to the root base **23** of the seed/plant cup and/or its vicinity. The irrigation fluid can saturate the plant bedding material tile **22** with fluid flowing from the top of the plant bedding material tile **22** to below or, as shown in this figure, can be directed through the funnel **40** to arrive in proximity to a seed/plant cup **25** root base structure **23.** From there fluid can travel in all directions inside the plant bedding material tile **22.**

This method can save irrigation fluid **20** and reduce root proliferation across the bedding material tile **22.** In another non-funnel **40** configuration, the fluid is instead configured to flow from the top surface of the bedding material tile **22** downwardly. The one or more funnels **40** are preferably configured to be substantially vertically aligned with the one or more cup bedding material openings **27** in the plant bedding material tile **22.** Other elements shown include an irrigation pipe **36** with an irrigation nozzle **37,** a coupling fastener **19** that couples the casing **30** of the plant bedding material tile **22** to the solid/acoustic board **6, 7,** and mechanical fasteners **14** coupling the board **6, 7** to the top flange **2** of the elongated wall panel **9.** Although **Fig. 5b** discloses as single-sided elongated wall panel **9,** the same principle is equally applicable to a double-sided wall panel **10.**

Further, the top and bottom flanges comprise weep holes **41** allowing a draining of irrigation fluid.

**Figs. 6a** and **6b** show in perspective view mechanical means to couple the plant bedding material casing **30** to a board and a single-sided elongated wall panel **9,** respectively. Although **Figs. 6a and 6b** illustrate an acoustic board, the same principle is equally applicable to a solid board.

**Fig. 6a** shows in perspective view an exemplary means to couple a plant bedding material casing **30** to a board **6, 7.** The present figure shows continuous strips of Velcro-type fasteners **19** longitudinally disposed in proximity to the top and the bottom ends of the inner side of the board **6, 7,** and reciprocating longitudinal fastener **19** strips in proximity to the exterior facing's top and the bottom of the plant bedding material casing **30.** The arrangement allows for shipping the boards **6, 7** either coupled or not coupled to the plant bedding material casing **30.** The plant bedding material tiles **22** can be shipped disposed inside their respective casings **30,** or instead, to be mounted with the casings **30** in the field. Furthermore, in at least one embodiment, the plant bedding material tile **22** or the plant bedding material tile **22** with its casing **30** can be detached and replaced with new boards **6,7** and/or casings **30.**

**Fig. 6b** shows in perspective view a preferred means to couple a plant bedding material tile casing **30** to the vertical wall **4** of an elongated wall panel **9.** Although a single-sided elongated wall panel **9** is illustrated, the principle is equally applicable to a double-sided elongated wall panel **10.** The present figure shows continuous strips of Velcro-type fasteners **19** disposed in proximity to the longitudinal top and bottom ends of the back side of the plant bedding material casing **30** and reciprocating fastener **19** strips in proximity to the longitudinal top and bottom of the inner vertical wall **4** of the wall panel **9.** The arrangement allows for shipping the panel wall **1, 9** with or without the plant bedding material casing **30** coupled, and with or without the plant bedding material tiles **22** disposed inside the casing **30.** Furthermore, in at least one embodiment, the bedding material casing **30** and/or the bedding material tile **22** is detachable and can be replaced. The present figure is primarily suited to applications where the board **6, 7** can be removed, thereby exposing the internal elements inside the wall panel **1, 9.**

The mounting methods described for **Figs. 6a** and **6b** are exemplary methods. Other mounting methods for mounting the plant bedding material tile **22,** the plant bedding material tile **22** inside the casing **30,** and the solid or acoustic board **6, 7** can include at least one of: bonding, riveting, screwing, lamination, and spiking. Also, the mounting methods are equally applicable in the event the elongated wall panel should be a double-sided wall panel **10.**

**Figures 7a** and **7b** show exemplary methods of removable and fixed coupling of the solid/acoustic board **6, 7** to the flanges **2, 3** of the wall panel **1,** respectively. Although the methods are illustrated in view of a single-sided wall panel **9,** the mounting methods are equally applicable in the event the elongated wall panel should be a double-sided wall panel **10.**

**Fig. 7a** shows a transverse section of the wall panel **1** with an exemplary solid/acoustic board **6, 7.** The board **6, 7** is coupled to a casing **30** containing the plant bedding material tile **22.** The present figure shows the longitudinal bottom of a board **6, 7** resting inside a reciprocating channel **18** built into the bottom flange **3.** In proximity to the top end of the longitudinal board **6, 7,** at least one bore **13** in the board **6, 7** is configured to receive at least one fastening device **14** that fastens the board **6, 7** to a reciprocating receiving structure built into the top flange **2** of the wall panel **9** and/or directly coupled to it. This board **6, 7** mounting method enables coupling the solid or acoustic board **6, 7** with the plant bedding material tile **22** and casing **30** complete to the wall panel **1, 9.** It also enables easy access to the interior of the wall panel **9** when at least one of: the plant bedding material tile **22,** the casing **30,** an irrigation fitting **36, 37, 38,** and/or an electrical fitting/device **42** needs to be replaced. The installer then simply removes the at least one tamper proof or non-tamper proof mechanical fastening device **14** and pulls down the solid/acoustic board **6, 7** from the top side in a rotational, tilting motion as shown in the figure. A coupled enlargement shows in more detail the coupling detail of a board **6, 7** to the top and bottom flanges **2.**

**Fig. 7b** shows a transverse section of the elongated wall panel **9** with an exemplary solid/acoustic board **6, 7** coupled. The board **6, 7** can be coupled to the top and the bottom flanges **2, 3** of the wall panel **1.** The present figure shows the top and the bottom longitudinal ends of the solid/acoustic board **6, 7** captured in a wedged manner inside the counter channels **18** formed in the top and bottom flanges **2, 3.** This exemplary method to secure the solid or acoustic board **6, 7** to the wall panel **9** is one among several mounting methods that can be utilized. Common to all methods is that the solid or the acoustic board **6, 7** is secured in position during the process of erecting the modular wall **100.** This method may require removing above wall panel/s if an interior element inside the wall panel **1** needs replacing. A coupled enlargement shows in more detail the coupling detail of a board **6, 7** to the top and bottom flanges **2, 3.**

The methods of mounting the solid or acoustic board **6, 7** to the wall panel **1,** as shown in **Figs. 7a** and **7b****,** can include plant material tile **22** and/or plant bedding material tile **22** inside casing **30.** However, in a different embodiment, the solid or acoustic board **6, 7** can only incorporate noise absorbing material and/or at least one device that must be out of reach inside the wall panel **1.**

**Figs. 8a** and **8b** show partial sections of single- and double-sided wall panels **9, 10** with solid/acoustic boards **6, 7** and plant material **21.** **Fig. 8c** shows a partial section of back-to-back, single-sided wall panels **9** with a gap **11** between two single-sided wall panels **9.**

**Fig. 8a** shows a partial transverse section of a single-sided elongated wall panel **9** with a plant bedding material tile **22** inside a casing **30** coupled to a solid/acoustic board **6, 7,** with plants **21** growing from a seed/plant cup **25** at the modular wall's **100** exterior. The seed/plant cup **25** is inserted through an opening **32** in the board **6, 7,** growing roots **23** inside the plant bedding material tile **22.** The entire modular wall **100** described above is formed by coupling the same or different elongated wall panels **9** from above and below. The wall panels **9** are keyed to one another by a mechanical key **5** that can be configured into the profile of the top and/or the bottom flange/s **2, 3** of the wall panels **1.** Above the plant bedding material casing **30,** a continuous irrigation pipe **36** is shown with an irrigation nozzle **37.** The irrigation pipe **36** shown is coupled to the bottom face of the top flange **2** of the wall panel **9.** In another embodiment, the irrigation pipe **36** can be disposed on the top surface of the bottom the wall panel **9** bottom flange **3.** In yet another embodiment, no irrigation pipe is needed, and the bottom flange **3** of the wall panel **1** conveys irrigation fluid **20** to the plant bedding material tile **22.** Weep holes **41** are arranged in the top and bottom flanges **2, 3** allowing a flow of irrigation fluid between the stacked elongated wall panels **9.**

**Fig. 8b** shows a partial transverse wall panel section of a double-sided elongated wall panel **10** retaining at least one plant bedding material tile **22** and/or a solid or acoustic board **6, 7** on both sides of the modular wall **100.** It is realized that one side can be provided with plant bedding material tiles **22** to allow cultivation, whereas the other side of the modular wall **100** can be provided with solid/acoustic panels **6, 7.** In this figure, the plant material **21** can grow from both sides of the wall **10** wherein a common vertical wall **4** of the elongated wall panel **10** is disposed between the two openings retaining the plant bedding material tiles **22.**

**Fig. 8c** shows a partial transverse section of a wall with back-to-back single-sided wall panels **9,** with an air gap **11** between. In another embodiment, a barrier member **12** can be disposed between the vertical walls **4** of the wall panels **1, 9.** The barrier member **12** can be selected to withstand ballistic projectiles, reduce sound transmittance, and incorporate sensing devices and/or other electronic or mechanical conductors requiring a chase. The entire wall assemblies **1** shown in **Figs. 8a, 8b** and **8c** are wedged between flanges of vertical posts **8** disposed at both ends of the wall panels **1** that together comprise the modular wall **100** assembly

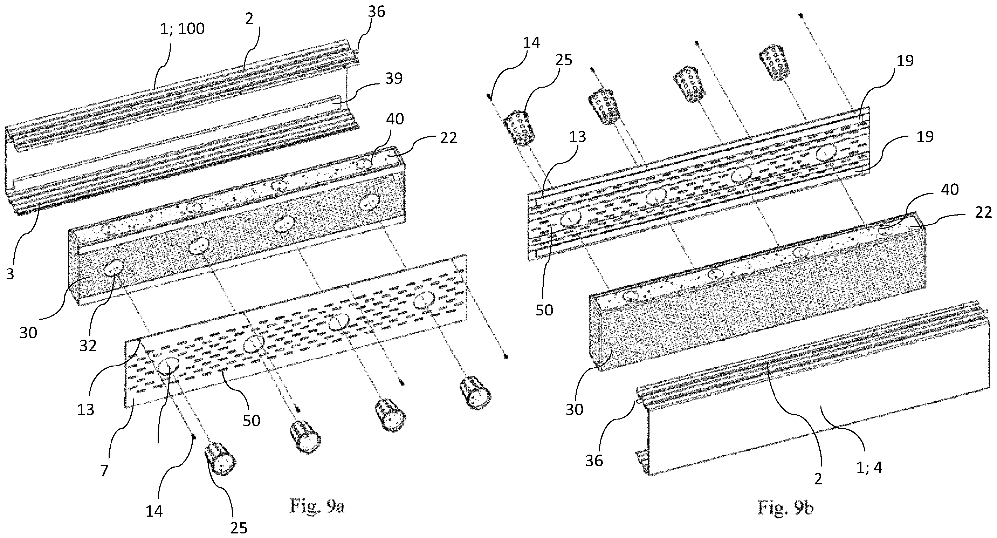

**Figs. 9a** and **9b** show front and back exploded perspective views of a section of the modular wall **100,** wall panel **1** assembly with an irrigation pipe **36** and sound attenuation **39** strips, including the plant bedding material tile **22,** the casing **30** with coupling fasteners **19,** an acoustic board **7** with coupling fasteners **19,** seed/plants cups **25,** and mechanical fasteners **14** respectively.

The embodiments and examples set forth herein are presented in order to best explain the present invention and its practical application and to thereby enable those of ordinary skill in the art to make and use the invention. However, those of ordinary skill in the art will recognize that the foregoing description and examples have been presented for the purposes of illustration and example only. The description as set forth is not intended to be exhaustive or to limit the invention to the precise form disclosed. Many modifications and variations are possible in the light of the teachings above without departing from the scope of the forthcoming claims.

Especially, the skilled person realizes that the elongated wall panels **9, 10** may comprise a plurality of plant bedding material tiles **22** and boards **6, 7** arranged side by side along their longitudinal directions. Thus, the tiles **22** and boards **6, 7** may each have a length that is substantially shorter than the respective elongated wall panel **9, 10.** Also, one and the same elongated wall panel **9, 10** may, along its longitudinal extension be provided with a mixture of plant bedding material tiles **22,** sound attenuating material tiles, acoustic boards **7** and non-acoustic boards **6.** Further, the skilled person realizes that the pattern of openings **50** in the acoustic boards **7** may vary. Also, the same sound attenuating effect may be achieved by recesses.

**ELEMENTS LIST**

| | | | |
|---|---|---|---|
| 1. | Arrangement of wall panels | 27. | Cup bedding material opening |
| 2. | Top flange | 28. | Top mounting ring |
| 3. | Bottom flange | 29. | Cup protrusion tab |
| 4. | Vertical wall | 30. | Casing |
| 5. | Mechanical key | 31. | Top surface opening |
| 6. | Solid board | 32. | Plant cup opening |
| 7. | Acoustic board | 33. | Mechanical keying apparatus |
| 8. | Vertical post | 34. | Perforated opening |
| 9. | Single sided wall panel | 35. | Opening edge |
| 10. | Double sided wall panel | 36. | Irrigation pipe |
| 11. | Air gap | 37. | Irrigation nozzle |
| 12. | Barrier member | 38. | Irrigation fitting |
| 13. | Bore | 39. | Sound Attenuating Material |
| 14. | Mechanical fastener | 40. | funnel |
| 15. | Protrusion | 41. | Weep hole |
| 16. | Protective membrane | 42. | Electrical fitting/device |
| 17. | Acoustic board bottom | | |
| 18. | Counter channel | | |
| 19. | Coupling fastener | | |
| 20. | Fluid | | |
| 21. | Plant/s | | |
| 22. | Plant bedding material tile | | |
| 23. | Root/s | | |
| 24. | Seed/s | | |
| 25. | Seed/plant cup | | |
| 26. | Bedding material | | |

## Claims

1. A modular wall system comprising a plurality of elongated wall panels (9; 10) disposed on one another, a plant bedding material tile (22), a seed/plant cup (25), a board (6; 7), and an irrigation pipe (36), wherein:
the elongated wall panels (9; 10) comprise a vertical wall (4), a top flange (2) and a bottom flange (3);
the fluid emitting irrigation pipe (36) is disposed on and/or couples to at least one of the top and bottom flanges (2; 3) of an elongated wall panel (9; 10);
the board (6; 7) comprises at least one opening (32) configured to receive a seed/plant cup (25), and wherein the board (6; 7) is coupled to at least one of the flanges (2; 3) of the elongated wall panel (9; 10), thereby forming a wall panel interior;
the plant bedding material tile (22) is configured to be coupled to an interior vertical wall portion (4) of the elongated wall panel (9; 10) and/or to an interior wall portion of the board (6; 7);
the seed/plant cup (25) is configured to be inserted from the outside through the at least one opening (32) in the board (6; 7) to thereby be partially disposed inside a cup bedding material opening (27) of the plant bedding material tile (22); and wherein
once irrigated by a fluid supply provided by the fluid emitting irrigation pipe (36), a seed/plant in the seed/plant cup (25) disposed inside the plant bedding material tile (22) is configured to grow roots into the plant bedding material tile (22) and grow a canopy extending from an exterior of the board (6; 7).

2. The modular wall system according to claim 1, wherein the board (6; 7) is an acoustic board, or wherein the board is a non-acoustic board.

3. The modular wall system of claim 1, wherein the board (6; 7) has at least one sound attenuation through opening (50).

4. The modular wall system of claim 1, wherein the board (6; 7) comprises a bore (13) configured to couple the board (6; 7) to the elongated wall panel (9; 10) by means of a mechanical fastener (14).

5. The modular wall system of claim 1, wherein board (6; 7) is removably fixated between the top and bottom flanges (2; 3) of the elongated wall panel (9; 10).

6. The modular wall system of claim 1, wherein the modular wall system comprises at least two single-sided or double-sided elongated wall panels (9; 10).

7. The modular wall system of claim 1, wherein a flange (2; 3) of a first elongated wall panel (9; 10) is configured to be coupled to a flange (2; 3) of a second elongated wall panel (9; 10) by at least one reciprocating mechanical key (5).

8. The modular wall system of claim 1, wherein the top and bottom flange (2; 3) of the elongated wall panel (9; 10) comprise one or more weep holes (41).

9. The modular wall system of claim 1, wherein the plant bedding material tile (22) comprises at least one funnel (40), the at least one funnel being configured to be substantially vertically aligned with a respective cup bedding material opening (27) in the plant bedding material tile (22).

10. The modular wall system of claim 1, wherein the plant bedding material tile (22) is configured to be coupled to the board (6; 7) and/or to a plant bedding material casing (30).

11. A modular wall (100) formed by the use of modular wall system according to any of claims 1-10, wherein a plurality of elongated wall panels (9; 10) are arranged in a stacked relationship, one on top of the other, between at least two vertically extending posts (8).

12. The modular wall according to claim 11, wherein the modular wall (100) is formed by at least two single-sided or double-sided elongated wall panels (9; 10) and wherein at least one of the sides of the modular wall (100) comprises a plurality of seed/plant cups (25).

## Patentansprüche

1. Modulares Wandsystem umfassend eine Vielzahl von übereinander angeordneten, länglichen Wandplatten (9; 10), einen Pflanzeneinbettungsmaterialblock (22), einen Samen-/Pflanzenbehälter (25), eine Platte (6; 7) und ein Bewässerungsrohr (36), wobei:
die länglichen Wandplatten (9; 10) eine vertikale Wand (4), einen oberen Flansch (2) und einen unteren Flansch (3) umfassen;
das Fluid abgebende Bewässerungsrohr (36) auf dem oberen und/oder dem unteren Flansch (2; 3) einer länglichen Wandplatte (9; 10) angeordnet und/oder mit diesem verbunden ist;
die Platte (6; 7) mindestens eine Öffnung (32) umfasst, die zur Aufnahme eines Samen-/Pflanzenbehälters (25) konfiguriert ist, und wobei die Platte (6; 7) mit mindestens einem der Flansche (2; 3) der länglichen Wandplatte (9; 10) verbunden ist, wodurch ein Wandplatteninnenraum gebildet wird;
der Pflanzeneinbettungsmaterialblock (22) konfiguriert ist, um mit einem inneren vertikalen Wandabschnitt (4) der länglichen Wandplatte (9; 10) und/oder mit einem inneren Wandabschnitt der Platte (6; 7) verbunden zu werden;
der Samen-/Pflanzenbehälter (25) konfiguriert ist, um von außen durch die mindestens eine Öffnung (32) in der Platte (6; 7) eingesetzt zu werden, um dadurch teilweise in einer Behältereinbettungsmaterialöffnung (27) des Pflanzeneinbettungsmaterialblocks (22) angeordnet zu sein; und wobei
nach der Bewässerung durch eine Fluidzufuhr, die durch das Fluid abgebende Bewässerungsrohr (36) bereitgestellt wird, ein Samen/eine Pflanze in dem Samen-/Pflanzenbehälter (25), der innerhalb des Pflanzeneinbettungsmaterialblocks (22) angeordnet ist, dazu ausgelegt ist, um Wurzeln in den Pflanzeneinbettungsmaterialblock (22) zu schlagen und ein Blätterdach zu bilden, das sich von einer Außenseite der Platte (6; 7) aus erstreckt.

2. Modulares Wandsystem nach Anspruch 1, wobei es sich bei der Platte (6; 7) um eine Akustikplatte handelt oder wobei es sich bei der Platte nicht um eine Akustikplatte handelt.

3. Modulares Wandsystem nach Anspruch 1, wobei die Platte (6; 7) mindestens eine schalldämmende Durchgangsöffnung (50) aufweist.

4. Modulares Wandsystem nach Anspruch 1, wobei die Platte (6; 7) eine Bohrung (13) aufweist, die konfiguriert ist, um die Platte (6; 7) mittels eines mechanischen Befestigungsmittels (14) mit der länglichen Wandplatte (9; 10) zu verbinden.

5. Modulares Wandsystem nach Anspruch 1, wobei die Platte (6; 7) zwischen dem oberen und unteren Flansch (2; 3) der länglichen Wandplatte (9; 10) lösbar befestigt ist.

6. Modulares Wandsystem nach Anspruch 1, wobei das modulare Wandsystem mindestens zwei einseitige oder doppelseitige längliche Wandplatten (9; 10) umfasst.

7. Modulares Wandsystem nach Anspruch 1, wobei ein Flansch (2; 3) einer ersten länglichen Wandplatte (9; 10) konfiguriert ist, um durch mindestens einen hin- und hergehenden mechanischen Schlüssel (5) mit einem Flansch (2; 3) einer zweiten länglichen Wandplatte (9; 10) verbunden zu sein.

8. Modulares Wandsystem nach Anspruch 1, wobei der obere und der untere Flansch (2; 3) der länglichen Wandplatte (9; 10) ein oder mehrere Ablauflöcher (41) umfassen.

9. Modulares Wandsystem nach Anspruch 1, wobei der Pflanzeneinbettungsmaterialblock (22) mindestens einen Trichter (40) umfasst, wobei der eine oder die mehreren Trichter konfiguriert sind, um im Wesentlichen vertikal zu einer entsprechenden Behältereinbettungsmaterialöffnung (27) in dem Pflanzeneinbettungsmaterialblock 22 ausgerichtet zu sein.

10. Modulares Wandsystem nach Anspruch 1, wobei der Pflanzeneinbettungsmaterialblock (22) konfiguriert ist, um mit der Platte (6; 7) und/oder einer Pflanzeneinbettungsmaterialummantelung (30) verbunden zu sein.

11. Modulare Wand (100), gebildet durch die Verwendung eines modularen Wandsystems nach einem der Ansprüche 1 bis 10, wobei die Vielzahl von länglichen Wandplatten (9; 10) zwischen mindestens zwei vertikal verlaufenden Pfosten (8) in gestapelter Beziehung übereinander angeordnet ist.

12. Modulare Wand nach Anspruch 11, wobei die modulare Wand (100) von mindestens zwei einseitigen oder doppelseitigen länglichen Wandplatten (9; 10) gebildet ist und wobei mindestens eine der Seiten der modularen Wand (100) eine Vielzahl von Samen-/Pflanzenbehältern (25) umfasst.

## Revendications

1. Système de mur modulaire comprenant une pluralité de panneaux muraux allongés (9 ; 10) disposés les uns sur les autres, une dalle de matériau de litière végétale (22), un godet à semer/planter (25), un tableau (6 ; 7) et un tuyau d'irrigation (36), dans lequel :
les panneaux muraux allongés (9 ; 10) comprennent une paroi verticale (4), un flasque supérieur (2) et un flasque inférieur (3) ;
le tuyau d'irrigation refoulant un fluide (36) est disposé sur et/ou est couplé à au moins l'un des flasques supérieur et inférieur (2 ; 3) d'un panneau mural allongé (9 ; 10) ;
le tableau (6 ; 7) comprend au moins une ouverture (32) configurée pour recevoir un godet à semer/planter (25), et dans lequel le tableau (6 ; 7) est couplée à au moins l'un des flasques (2 ; 3) du panneau mural allongé (9 ; 10), formant ainsi l'intérieur d'un panneau mural ;
la dalle de matériau de litière végétale (22) est configurée pour être couplée à une portion de paroi verticale intérieure (4) du panneau mural allongé (9 ; 10) et/ou à une portion de paroi intérieure du tableau (6 ; 7) ;
le godet à semer/planter (25) est configuré pour être inséré depuis l'extérieur à travers ladite au moins une ouverture (32) dans le tableau (6 ; 7) pour être ainsi partiellement disposé à l'intérieur d'une ouverture pour godet de matériau de litière (27) de la dalle de matériau de litière végétale (22) ; et dans lequel
une fois irriguée par une alimentation fluide fournie par le tuyau d'irrigation refoulant un fluide (36), une graine/plante dans le godet à semer/planter (25) disposé à l'intérieur de la dalle de matériau de litière végétale (22) est configurée pour faire pousser des racines dans la dalle de matériau de litière végétale (22) et un feuillage qui s'étend à partir de l'extérieur du tableau (6 ; 7).

2. Système de mur modulaire selon la revendication 1, dans lequel le tableau (6 ; 7) est un tableau acoustique, ou dans lequel le tableau est un tableau non acoustique.

3. Système de mur modulaire selon la revendication 1, dans lequel le tableau (6 ; 7) comporte au moins une ouverture traversante d'atténuation acoustique (50).

4. Système de mur modulaire selon la revendication 1, dans lequel le tableau (6 ; 7) comprend un perçage (13) configuré pour coupler le tableau (6 ; 7) au panneau mural allongé (9 ; 10) au moyen d'une fixation mécanique (14).

5. Système de mur modulaire selon la revendication 1, dans lequel le tableau (6 ; 7) est fixé de manière amovible entre les flasques supérieur et inférieur (2 ; 3) du panneau mural allongé (9 ; 10).

6. Système de mur modulaire selon la revendication 1, dans lequel le système de mur modulaire comprend au moins deux panneaux muraux allongés à simple face ou à double face (9 ; 10).

7. Système de mur modulaire selon la revendication 1, dans lequel un flasque (2 ; 3) d'un premier panneau mural allongé (9 ; 10) est configuré pour être couplé à un flasque (2 ; 3) d'un deuxième panneau mural allongé (9 ; 10) par au moins une clé mécanique alternative (5).

8. Système de mur modulaire selon la revendication 1, dans lequel les flasques supérieur et inférieur (2 ; 3) du panneau mural allongé (9 ; 10) comprennent un ou plusieurs trous d'évacuation (41).

9. Système de mur modulaire selon la revendication 1, dans lequel la dalle de matériau de litière végétale (22) comprend au moins un entonnoir (40), ledit au moins un entonnoir étant configuré pour être aligné de manière sensiblement verticale avec une ouverture pour godet de matériau de litière respective (27) dans la dalle de matériau de litière végétale (22).

10. Système de mur modulaire selon la revendication 1, dans lequel la dalle de matériau de litière végétale (22) est configurée pour être couplée au tableau (6 ; 7) et/ou à un boîtier de matériau de litière végétale (30).

11. Mur modulaire (100) formé par l'utilisation d'un système de mur modulaire selon l'une quelconque des revendications 1 à 10, dans lequel une pluralité de panneaux muraux allongés (9 ; 10) sont agencés par empilement, les uns sur les autres, entre au moins deux montants (8) qui s'étendent verticalement.

12. Mur modulaire selon la revendication 11, dans lequel le mur modulaire (100) est formé par au moins deux panneaux muraux allongés à simple face ou à double face (9 ; 10), et dans lequel au moins un des côtés du mur modulaire (100) comprend une pluralité de godets à semer/planter (25).
